# NEUE EUROPÄISCHE PATENTSCHRIFT

(11) **EP 1 329 349 B2**
(45) Veröffentlichungstag und Bekanntmachung des Hinweises auf die Entscheidung über den Einspruch: **30.09.2009**
(45) Hinweis auf die Patenterteilung: 20.10.2004
(21) Anmeldenummer: 03000485.7
(22) Anmeldetag: 11.01.2003
(51) Int. Cl.: B60J 1/20, B60R 5/04, E06B 9/60

(54) **Vormontierte Rolloeinheit**
Preassembled roller blind
Store à enrouleur préassemblé

(30) Priorität: 17.01.2002 DE 10201786
(43) Veröffentlichungstag der Anmeldung: 23.07.2003
(73) Patentinhaber: BOS GmbH & Co. KG, 73760 Ostfildern (DE)
(72) Erfinder: Coulibaly, Abdoul, 73760 Ostfildern (DE); Belibel, Bouaziz, 63579 Freigericht (DE); Binder, Christoph, 73733 Esslingen (DE)
(74) Vertreter: Rüger, Barthelt & Abel Patentanwälte

(56) Entgegenhaltungen:
- EP-A- 0 701 039
- EP-A1- 1 262 350
- DE-A- 2 941 711
- DE-A1- 19 640 846
- DE-C- 19 903 811
- FR-A1- 2 752 874
- US-A- 4 674 550
- US-A- 4 762 358

## Beschreibung

Soweit für Fensterrollos in Kraftfahrzeugen ausreichend Platz zur Verfügung steht, kann das Rollo als Baueinheit komplett mit Gehäuse oder Einbaurahmen vormontiert werden. Die gesamte Einheit wird an das Montageband geschafft und dort als Ganzes eingebaut.

Derartige Verhältnisse liegen beispielsweise bei Heckscheibenrollos vor. Anders ist es hingegen, wenn das Rollo in Türen oder hinter der Seitenverkleidung von Kraftfahrzeugen unterzubringen ist. Der Raum dort ist in aller Regel nicht ausreichend bemessen, um eine komplett vormontierte Einheit dort unterbringen zu können. Es ist in solchen Fällen erforderlich, die Lagereinrichtungen für die Wickelwelle unmittelbar in der Karosserie an entsprechenden Teilen zu befestigen und nachträglich die Wickelwelle mit dem daran befestigten Rollo einzusetzen. Hierbei stellt sich allerdings die Schwierigkeit, dass das Rollo, auch wenn es elektrisch betrieben ist, für gewöhnlich mit Hilfe eines in der wickelwelle untergebrachten Federmotors eingefahren wird. Damit der Federmotor seine Funktion erfüllen kann, muss er entsprechend aufgezogen sein, damit auch bei vollständig aufgewickelter Rollobahn noch eine ausreichende Wickelkraft zur Verfügung steht.

Dieses Aufziehen des Federmotors am Montageband ist problematisch, insbesondere weil eine genau vorbestimmte Anzahl von Umdrehungen zum Aufziehen erforderlich ist. Wird die Vorspannung zu hoch eingestellt, kommt der Federmotor an die Grenze, wenn die Rollobahn vollständig ausgefahren werden soll und blockiert ein weiteres Ausfahren. Wird hingegen die Feder zu schwach aufgezogen, reicht die Vorspannung bei aufgewickelter Rollobahn nicht aus, um eine klapperfreies Unterbringen zu gewährleisten.

Aus der DE 29 41 711 A1 ist außerdem eine herausnehmbare Laderaumabdeckung bekannt, die dazu vorgesehen ist, die Ladebucht eines Kombi-Pkw oder eines vergleichbaren Fahrzeugs nach oben hin abzudecken. Die Laderaumabdeckung weist ein rohrförmiges, längsgeschlitzes Gehäuse auf, an dessen Enden Kappen vorgesehen sind, die Verankerungsmittel tragen, mit denen die Kappen in dem Fahrzeug zu halten ist.

Innerhalb des so gebildeten Gehäuses befindet sich eine Wickelwelle, die mit Hilfe eines Federmotors im Sinne des Aufwickelns der Laderaumabdeckung vorgespannt wird. Der Federmotor stützt sich einends an einer der beiden Endkappen und andernends an der Wickelwelle ab.

Um zu verhindern, dass bei herausgenommenem Rollo sich der Federmotor in unerwünschter Weise entspannt, ist mit der axial beweglichen Endkappe ein Sperrmechanismus gekoppelt. Der Sperrmechanismus gelangt in die Sperrstellung, wenn sich die Endkappe aufgrund der Vorspannkraft einer weiteren Vorspannfeder von dem Gehäuserohr wegbewegen kann. Beim erneuten Einsetzen wird diese Sperreinrichtung entriegelt, indem die Endkappe gegen die Wirkung der Druckfeder auf das Gehäuserohr geschoben wird.

Die Sperreinrichtung der bekannten Laderaumabdeckung wird jedesmal beim Entnehmen in die entsperrte Stellung und jedesmal beim Herausnehmen in die gesperrte Stellung überführt.

Die EP 1 262 350 A1 zeigt eine Rolloanordnung mit einer Wickelwelle, an der mit einer Kante eine Rollobahn befestigt ist. Die Wickelwelle ist gegenüber einem Lagerstück für die Wickelwelle.mit Hilfe eines Federmotors vorgespannt. Um die Drehbewegung zwischen der Wickelwelle und dem Lagerstück zu blockieren ist vorgesehen, das Lagerstück mit der Wickelwelle zu verkleben. Um die Anordnung funktionsfähig zu machen, muss die Verklebung aufgebrochen werden.

Gemäß einer anderen Lösung ist ein axial sich erstreckender Zapfen vorgesehen, der eine Relativdrehung zwischen der Wickelwelle und dem Lagerstück sperrt. Die Druckschrift sagt nichts darüber aus, wie der Zapfen aus der Ausnehmung an der Wickelwelle freikommt um die Anordnung funktionsfähig zu machen.

Die FR 2 752 874 zeigt eine Rolloanordnung, bei der der Federmotor vor dem Einbau gesperrt wird, indem ein Zapfen verwendet wird, der durch eine Öffnung in der Wickelwelle hindurchführt und in einer Bohrung eines Lagerstücks steckt. Durch Drehen der Wickelwelle kann der Zapfen an einer Sollbruchstelle abgebrochen werden.

Aus der DE 196 40 846 A1 ist eine vormontierte Rollobaugruppe bekannt, die eine Wickelwelle mit zwei Enden aufweist. An der Wickelwelle ist eine Rollobahn mit einer Kante befestigt. Ein Federmotor innerhalb der Wickelwelle dient dazu, die Wickelwelle im Sinne des Aufwickelns der Rollobahn auf die wickelwelle vorzuspannen. Der Federmotor weist zwei Betätigungsenden auf, von denen eines an der Wickelwelle verankert ist und das andere an einer der beiden Lagereinrichtungen, die an den Enden der Wickelwelle vorgesehen sind. Die Lagereinrichtungen weisen Verbindungsmittel zum Anbringen in einem Fahrzeug oder einem Gehäuse auf.

Die vormontierte Rollobaugruppe umfasst ferner eine willkürlich und ohne Werkzeug lösbare Drehsperreinrichtung, die dazu eingerichtet ist, bei der Montage der Rolloeinrichtung in den Sperrzustand gebracht zu werden, in der sie den zwischen der Wickelwelle und der betreffenden Lagereinrichtung wirksamen Federmotor in einer der aufgewickelten Rollobahn entsprechenden vorgespannten Stellung blockiert. Die Drehsperreinrichtung wird bei oder nach dem Einbau der Rolleinrichtung in das Fahrzeug oder das Gehäuse in ihre Entsperrstellung überführt, um nach dem Entsperren auf Dauer in der Entsperrstellung zu bleiben.

Die Drehsperreinrichtung weist hierzu eine in der Wickelwelle sitzende Lagerbüchse auf, die eine Z-förmige, axial verlaufende Nut enthält. Durch die Büchse verläuft der Lagerzapfen, an dem die den Federmotor bildende Schraubenfeder festgesetzt ist. Mit der Z-förmig verlaufenden Nut wirkt ein von dem Lagerzapfen weg stehender Fortsatz zusammeln, der die Drehung der Wickelwelle solange blockiert, wie er sich in der Nut befindet. Vor bzw. unmittelbar nach dem Einbau befindet sich der Fortsatz, in dem in Umfangsrichtung verlaufenden Teil der Z-förmig verlaufenden Nut. Durch Ziehen an der Rollobahn im Sinne des Abwickelns gelangt der Zapfen zu jenem achsparallel verlaufenden Abschnitt der Nut, der sich in Richtung auf die Wickelwelle öffnet. Dadurch kann die Feder den Lagerzapfen vollständig in die Führungsbüchse hineinziehen und die Drehsperreinrichtung wird gelöst. Damit ist die Drehsperreinrichtung derart gestaltet, dass sie durch ein Betätigen der Wickelwelle im Sinne des Abwickelns der Rollobahn von der Wickelwelle in die Entsperrstellung überführt wird.

Die bekannte Drehsperreinrichtung enthält somit zwei miteinander zusammenwirkende und unverlierbar gehalterte Sperrmittel, die miteinander zusammen wirken. Eines der Sperrmittel, nämlich die Büchse mit der Z-förmigen Nut, ist drehfest mit der Wickelwelle und das andere Sperrmittel in Gestalt des Fortsatzes mit dem Lagerzapfen verbunden. Die Sperrmittel selbst sind jeweils unbeweglich und das Entriegeln der Drehsperreinrichtung erfordert eine Axialbeweglichkeit der betreffenden Lagereinrichtung.

Ausgehend hiervon ist es Aufgabe der Erfindung, eine Rollobaugruppe zu schaffen, die mit einem vorgespannten Federmotor ausgeliefert werden kann.

Diese Aufgabe wird erfindungsgemäß durch die Rollobaugruppe mit dem Merkmalen des Anspruchs 1 gelöst.

Zu der vormontierten Rollobaugruppe gehört eine Wickelwelle, an der mit einer Kante die Rollobahn befestigt ist. Der Federmotor befindet sich im Inneren der Wickelwelle und ist dazu ausgelegt, die Wickelwelle im Sinne des Aufwickelns der Rollobahn vorzuspannen. Hierzu ist ein Ende des Federmotors an der Wickelwelle verankert. Das andere Ende des Federmotors ist an wenigstens einer Lagereinrichtung festgesetzt, die an einem Ende der wickelwelle vorgesehen ist, um sie in dem Fahrzeug oder einem Gehäuse zu lagern.

Eine willkürlich und ohne Werkzeug lösbare Drehsperreinrichtung ist so gestaltet, dass sie bei der Vorfertigung der Rollobaugruppe in den Sperrzustand gebracht werden kann, indem sie zwischen der Wickelwelle und der Lageeinrichtung wirksam ist, um den Federmotor in einer Stellung zu blockieren, die der aufgewickelten Rollobahn auf der Wickelwelle entspricht. Die Sperreinrichtung kann beim oder nach dem Einbau der Rollobaueinheit dauerhaft in die Entsperrstellung überführt werden, und zwar ohne Werkzeug.

Dazu ist eines der Sperrmittel federelastisch beweglich, während das andere starr ausgeführt ist.

An der Lagereinrichtung ist beispielsweise eine schwenkbare Klinke vorgesehen, die mit einer Rastausnehmung oder Tasche an der Wickelwelle zusammenwirkt. Die Klinke ist in die Entsperrstellung vorgespannt und wird durch die Wirkung des Federmotors und die dabei auftretende Kraft in der Tasche oder Ausnehmung gehalten. Durch Drehen der Wickelwelle im Sinne des Abwickelns, kann die Klinke aus der Tasche ausrasten und bleibt fortan aufgrund der Vorspannung in der ausgerasteten Stellung.

Es versteht sich, dass bei allen beiden oben genannten Ausführungsformen das Verriegelungsglied beziehungsweise die Klinke ebenso gut an der Wickelwelle angebracht werden kann, während die Tasche starr an der Lagereinrichtung sitzt.

Die Montage beim Zulieferer wird vereinfacht, wenn die Drehsperreinrichtung ein unverlierbar gehaltertes erstes Sperrmittel sowie ein unverlierbar gehaltertes zweites Sperrmittel aufweist, die dazu eingerichtet sind, im Sinne der Sperrwirkung miteinander zusammenzuwirken.

Die gewünschte dauerhafte Entsperrstellung wird erreicht, wenn das bewegliche Sperrmittel in die Entsperrstellung vorgespannt ist.

Um die Sperrmittel voneinander zu trennen beziehungsweise in die entsperrte Stellung zu bringen, kann die Anordnung so getroffen werden, dass hierzu eine Bewegung parallel zur Längsachse der Wickelwelle erforderlich ist. Die Andere Möglichkeit besteht darin, die Sperrmittel radial, bezüglich der Achse der Wickelwelle bewegbar zu gestalten.

Unter Umständen unterscheiden sich die Rollobaueinheiten im Wickelsinn. Beispielsweise bei Rolloanordnungen in der Seitentür wird angestrebt, dass die Mechanik so dicht wie möglich beim Scharnier der Tür untergebracht wird. Dadurch sollen an der Wickelmechanik die Kräfte klein gehalten werden, die entstehen, wenn die Tür zugeschlagen wird. Je weiter die Teile nämlich von der Drehachse des Scharniers entfernt sind, umso größer sind die Beschleunigungskräfte.

Um dem Rechnung zu tragen ist es von Vorteil, wenn die Drehsperreinrichtung in dem Sinne symmetrisch ausgeführt ist, dass sie für beide Wickelsinne der Wickelwelle geeignet ist, ohne besondere Änderungen zu erfordern.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung sind Ausführungsbeispiele des Gegenstandes der Erfindung dargestellt. Es zeigen:
- Fig. 1: eine Rollobaugruppe in einer perspektivischen schematischen Darstellung wie sie zum Einbau in einem Fahrzeug vorgesehen ist,
- Fig. 2: die Lagereinrichtung auf derjenigen Seite der Wickelwelle, die den Federmotor enthält, in einer perspektivischen Explosionsdarstellung,
- Fig. 3 und 4: unterschiedliche Eingriffsstellungen zwischen dem beweglichen und dem unbeweglichen Sperrglied, in einer schematischen Prinzipdarstellung, und
- Fig. 5: eine Lagereinrichtung für die Rollobaugruppe nach Figur 1 mit radialer Entriegelung, in einer perspektivischen Darstellung.

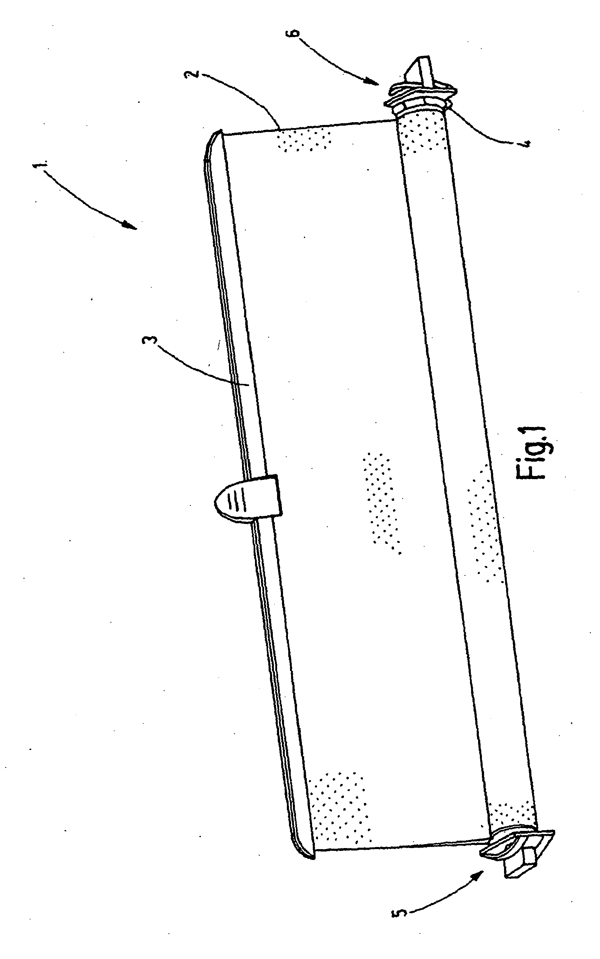

Figur 1 zeigt in einer perspektivischen stark schematisieren Ansicht eine Rollobaugruppe 1, die zum Einbau in ein Kraftfahrzeug vorgesehen ist. Die Rollobaugruppe 1 kann nach dem Einbau beilspielsweise ein Seitenfensterrollo, ein Heckscheibenrollo oder auch eine Laderaumabdeckung bilden.

Zu der Rollobaugruppe 1 gehören eine Rollobahn 2 mit einer Zugstange 3, eine schematisch erkennbare Wickelwelle 4 sowie zwei Lagerstücke 5 und 6. Die Rollobahn 2 ist mit der von der Zugstange 3 abliegenden Kante an der Wickelwelle 4 befestigt.

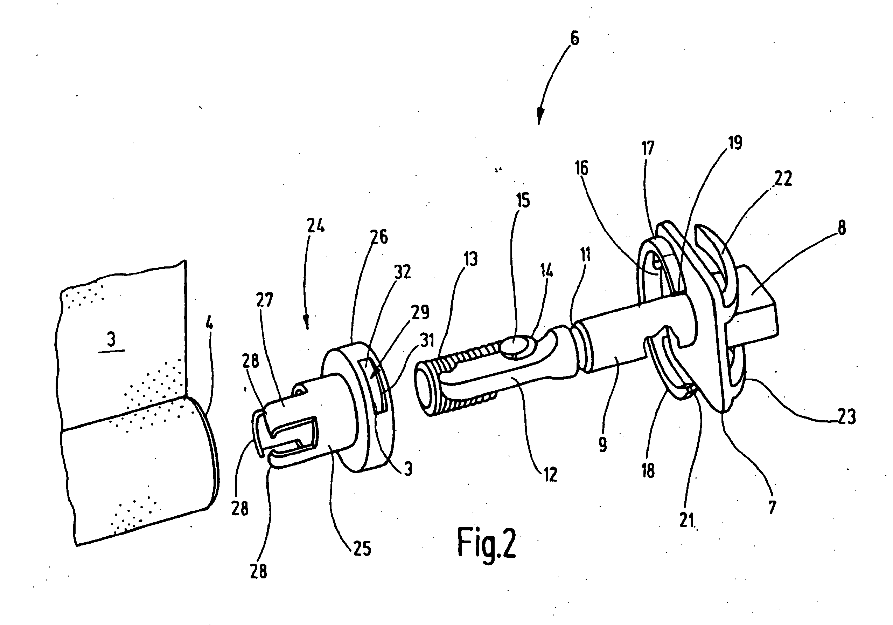

Den Aufbau des linken Lagerstückes 6 zeigt Figur 2 in einer perspektivischen Explosionsdarstellung. Das Lagerstück 6 weist eine radial zu der Achse der Wickelwelle 4 verlaufende Flanschplatte 7 auf, die auf ihre von der wickewelle 4 wegzeigenden Seite einen Vierkantzapfen 8 trägt. Der Vierkantzapfen 8 ist zum Einstecken in eine entsprechende Vierkantausnehmung oder -öffnung vorgesehen, die fahrzeugseitig vorhanden ist. Mit Hilfe des Vierkantzapfen 8 ist das Lagerstück 6 drehfest aufgenommen.

Auf der der Wickelwelle 4 zugekehrten Seite trägt die Flanschplatte 7 koaxial zu dem Vierkantzapfen 8 einen im wesentlichen zylindrischen Lagerzapfen 9. Der Lagerzapfen 9 enthält im Abstand von der Flanschplatte 7 eine Rastnut 11. Im weiteren Verlauf bildet der Lagerzapfen 9 einen Aufnahmezapfen 12 für eine Schraubenfeder 13, die mit einer Schlaufe 14 an einem Niet 15 verankert ist. Der Niet 15 sitzt in dem Aufnahmzapfen 12 in radialer Richtung und dient als Verankerungsstelle für die Federschlaufe 14.

Das andere Ende der Schraubenfeder 13 ist in bekannterweise drehfest in der Wickelwelle 4 verankert, so dass die Schraubenfeder 13 als Federmotor dienen kann, um die Wickelwelle 4 im Aufwickelsinne der Rollobahn 2 vorzuspannen. Auf derselben Seite wie der Lagerzapfen 9 befindet sich auf der Flanschplatte 7 ein kurzer Steg 16 der in Richtung auf die Wickelwelle 4 ragt. Der Steg 16 geht im axialen Abstand zu der Flanschplatte 7 in zwei Rastklinken 17 und 18 über, die bogenförmig gekrümmt mit etwa konstantem radialem Abstand ein Stück weit um den Umfang des zylindrischen Lagerzapfens 9 herumführen. Die Rastklinke 17 endet an einer Rastnase 19 und die Rastklinke 18 an einer Rastnase 21. Die beiden Rastnasen 19 und 21 haben einen funktionsbedingten Abstand voneinander. Der Funktionsbedingte Abstand erklärt sich aus der weiter unten gegebenen Erläuterung der wirkungsweise.

Schließlich trägt die Flanschplatte 7 noch auf der Seite des Vierkantzapfens 8 zwei Blattfedern 22 und 23, die im montierten Zustand eine vorbestimmte axiale Vorspannung auf die Baugruppe 1 ausüben sollen, um sie klapperfrei zwischen den Flanschplatten 7 zu halten.

Das Lagerstück 6 ist vorzugsweise ein Spritzformteil aus einem geeigneten Thermo- oder Duroplasten.

Auf derjenigen Seite der Wickelwelle 4, die dem Lagerstück 6 zugeordnet ist, steckt in der Wickelwelle 4 eine Lagerbüchse 24. Die Lagerbüchse 24 besteht aus einem rohrförmigen Fortsatz 25, der in die Wickelwelle 4 passt und der an dem aus der Wickelwelle 4 herausstehenden Ende in einen Bund 26 übergeht. Auf der von dem Bund 26 abliegenden Seite, bildet der rohrförmige Teil der Lagerbüchse 24, drei in axialer Richtung sich erstreckend und äquidistant verteilte Blattfedern 27, die am freien Ende eine Rastnase 28 tragen. Die drei Rastnasen 28 sind dazu eingerichtet, in der Rastnut 11 zu verrasten. In der verrasteten Stellung liegt die äußere Stirnfläche des Bunds 26 an der benachbarten Flachseite der Flanschplatte 7 an.

Die Lagerbüchse 24 ist in geeigneter Weise drehfest in der rohrförmigen Wickelwelle verankert. Sie ist dort beispielsweise eingeklebt.

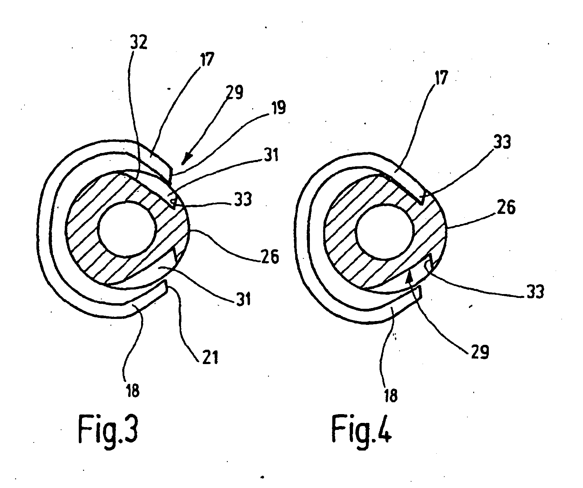

In der zylindrischen Außenumfangsfläche'des Bunds 26 befinden sich zwei spiegelbildlich zueinander angeordneten Rasttaschen 29. Von diesen beiden Rasttaschen 29 ist in der Darstellung von Figur 4 lediglich eine zu erkennen. Die andere Rasttasche 29 hat den gleichen Aufbau, ist jedoch in umgekehrter Richtung orientiert, wie dies die Schnittbilder nach Figur 3 und 4 zeigen.

Die Rasttasche 29 wird von parallelen Seitenwänden 31 sowie einem Boden 32 begrenzt. Der Boden 32 ändert in Umfangsrichtung gesehen seinen radialen Abstand von der Rotationsachse der Lagerbüchse 24. Er beginnt an der zylindrischen Außenumfangsfläche und endet bei 33 an einer Stirnfläche die radial geneigt ist, so dass sich von außen her gesehen eine Hinterschneidung ergibt.

Das Lagerstück 5 auf der anderen Seite kann grundsätzlich in der gleichen Weise ausgebildet sein, wie das in Figur 2 gezeigte Lagerstück 6. Es besteht aber auch die Möglichkeit bei dem Lagerstück 5 die Rastklinken 17 und 18 wegzulassen. In jedem Falle fehlt bei dem Lagerstück 5 die den Federmotor bildende Schraubenfeder 13.

Die Lagerbüchse 24 kann in der gleichen Ausführungsart wiederum vorhanden sein.

Die Funktionsweise ist wie folgt:

Auf seiten des Herstellers der Rollobaugruppe 1 wird die Rollobahn 2 mit der rohrförmigen Wickelwelle 4 längs einer Kante der Rollobahn 2 verbunden.. Die Rollobahn 2 wird auf die Wickelwelle aufgewickelt. Sodann wird von der entsprechenden Endseite her das Lagerstück 5, auf dem zuvor eine Lagerbüchse entsprechend der Lagerbüchse 24 aufgeschnappt wurde, eingesetzt. Die Lagerbüchse wird beispielsweise im Inneren der Wickelwelle 4 verklebt um eine Drehung gegenüber der Wickelwelle 4 zu vermeiden. Bei der Benutzung wird sich die Lagerbüchse auf dem Lagerzapfen des Lagerstücks 5 drehen.

Für das andere Ende der Wickelwelle 4 wird zunächst die'Lagerbüchse 24 auf den Lagerzapfen 9 aufgesteckt, soweit bis die Rastnasen 28 der Rastnut 11 verrasten. Sodann wird die Schraubenfeder 13 mit der Federschaufe 14 auf dem Zapfen 12 verankert. Das andere Ende der Schraubenfeder 12 ist mit einem geeigneten Widerlager oder Verankerungsteil versehen, das beispielsweise formschlüssig in einer entsprechenden Längsnut im Inneren der Wickelwelle 4 längsverschieblich, jedoch drehfest ist.

Nach dieser Vorbereitung wird die Baugruppe bestehend aus Lagerbüchse 24, Schraubenfeder 13 und Lagerstück 6 in das betreffende Ende der Wickelwelle 4 eingesteckt. Die Lagebüchse 24 wird in der Wickelwelle 4 drehfest montiert. Diese kann wiederum durch Verkleben oder beispielsweise auch durch Verstiften geschehen.

Die Rollobaugruppe 1 ist damit montagetechnisch vorbereitet. Lediglich der Federmotor ist nach wie vor nicht aufgezogen. Zum Aufziehen des Federmotors wird das Lagerstück 6 gegenüber der Wickelwelle 4 in der entsprechenden Drehrichtung gedreht. Die Zahl der Umdrehungen entspricht der gewünschten Vorspannung des Federmotors im Zustand mit aufgewickelter Rollobahn 2. Nach Erreichen der Sollaufzugsstellung wird die entsprechende Rastklinke 17 oder 18 radial nach innen in die zugehörige Tasche 29 hineingedrückt und die Haltekraft für das Lagerstück 6 aufgehoben.

Durch die Kraft der aufgezogenen Schraubenfeder 13 wird sich die Stirnseite 33 der betreffenden Tasche 29 mit entsprechender Kraft gegen das Stirnende 19 oder 21 der jeweils gewählten Rastklinke 17 oder 18 anlegen. In der Anlagestellung verläuft das Stirnende 19 beziehungsweise 21 parallel zu der Stirnfläche 33, wie dies Figur 4 erkennen lässt. Da das Stirnende wie zuvor erwähnt so aufgerichtet ist, dass sich von außen her eine Art Hinterschneidung ergibt, entsteht durch das Drehmoment in Verbindung mit der schräg verlaufenden Stirnfläche 33 eine Kraft, die bestrebt ist, die Rastklinke 17 oder 18 in die zugehörige Tasche 29 hineinzuziehen. Die betreffende Rastklinke 17 und 18 wird deswegen ihren verrasteten Zustand auch beibehalten, wenn keine weitere Kraft von außen her auf die betreffende Rastklinke 17 oder 18 einwirkt, um sie radial nach innen zu biegen.

Bei der Darstellung nach Figur 2 dreht sich die Wickelwelle 4 beim Aufwickeln der Rollobahn 2 im Uhrzeigersinne, wenn man von dem Vierkantzapfen 8 auf das betreffenden Stirnende der Wickelwelle 4 blickt. Dies bedeutet, dass zur Blockierung der Drehung in Aufwickelrichtung die Rastklinke 17 in Frage kommt. Sie ist in Verbindung mit der Tasche 29 in der Lage eine solche Rotation zu blockieren.

Die Rastklinke 18 mit der zugehörigen komplementär ausgerichteten Tasche 29 wäre für eine Drehrichtung zum Aufwickeln der Rollobahn in der entgegengesetzten Richtung vorgesehen. Sie könnte deswegen bei sonst unveränderten Rollo im Bereich des Lagerstückes 5 Verwendung finden, wenn dies ebenfalls in der Weise gestaltet ist, wie es in Figur 2 gezeigt ist.

Die Rollobaugruppe 1 ist nunmehr endgültig vormontiert und die Feder 13 in der gewünschten Weise aufgezogen. Die Rollobaugruppe 1 kann das Montageband geliefert werden und dort eingebaut werden. Nach dem Einbau genügt es, ein kurzes Stück die Rollobahn von der Wickelwelle 4 abzuwickeln, indem an der Zugstange 3 gezogen wird. Durch die in der Rastklinke 17 herrschende Biegevorspannung rastet die Rastklinke 17 aus der Aufnahmetasche 29 aus und bleibt fortan in ihrer entspannten Stellung stehen. In der entspannten Stellung hat das Stirnende 19 der Rastklinke 17 einen radialen Abstand von dem Lagerzapfen 9, der geringfügig größer ist, als der Außendurchmesser des Bunds 26. Die Wickelwelle 4 ist fortan frei drehbar, ohne Behinderung durch die Rastklinke 17.

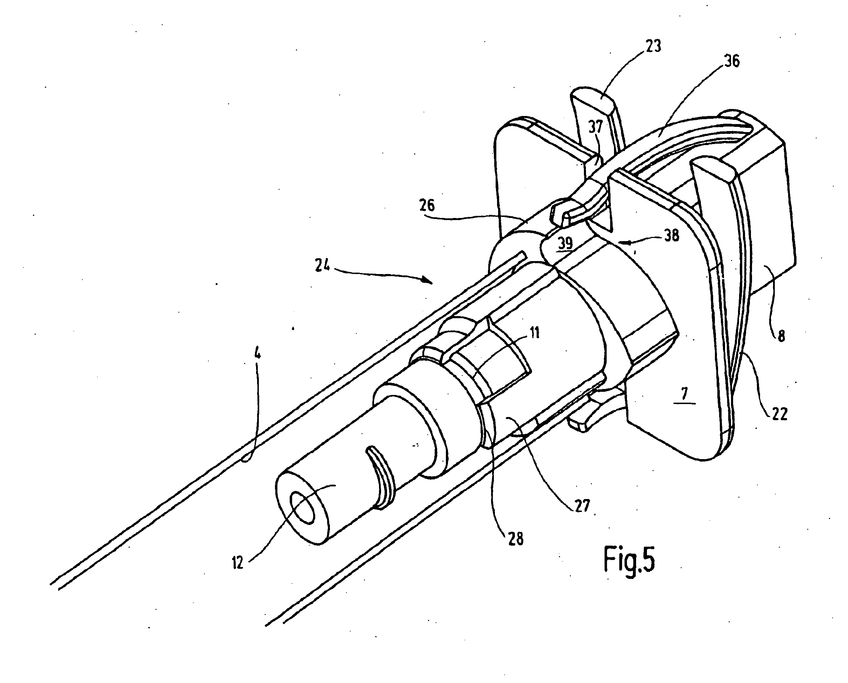

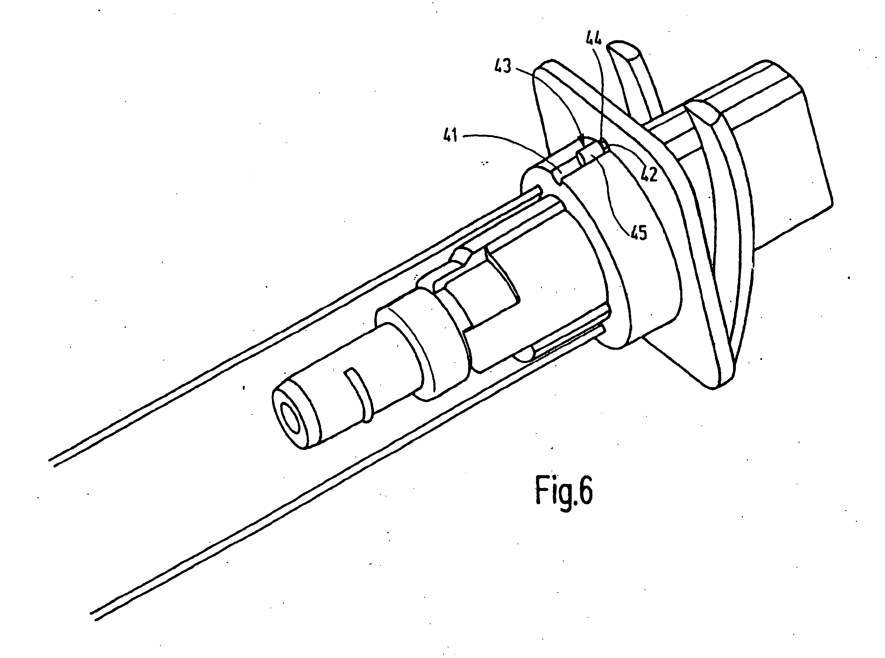

Bei dem Ausführungsbeispiel nach den Figuren 2 bis 4 ist eine radiale Verriegelung mit einer in Umfangsrichtung liegenden Rastklinke vorgesehen. Anstelle der radialen Ausrichtung kann eine axiale Ausrichtung vorgesehen sein. Ein entsprechendes Ausführungsbeispiel ist in Figur 5 gezeigt. Soweit dort bereits beschriebenen Baukomponenten wiederkehren, sind sie mit demselben Bezugszeichen wie zuvor belegt, ohne dass eine erneute Beschreibung gegeben wird.

Bei der Anordnung nach Figur 5 geht von dem Vierkantzapfen 8 jeweils von der Flachseite eine als Blattfeder ausgebildete Verriegelungsklinke 36 aus, die durch eine randseitige Ausnehmung 37 in der Flanschplatte in Richtung auf den Bund 26 der Lagerbüchse 24 ragt.

Der Bund 26 enthält zwei Ausnehmungen, von denen lediglich die Ausnehmung 38 zu erkennen ist. Diese endet an einer nutartig gekrümmten Wand 39, die aus der Sicht der Ausnehmung 38, wie gezeigt, konkav ist. Sie bildet wiederum eine Art Hinterschneidung. Die Ausnehmung 38 erstreckt sich über die gesamte Breite des Bunds 26, wodurch diese im Bereich zwischen den beiden Ausnehmungen die.Form eines Nockens bekommt. Die beiden Ausnehmungen 38 sind entgegengesetzt gerichtet, das heißt die Wand 39 ist in der entgegensetzten konkav, wie die funktional korrespondierende Wand der anderen nicht erkennbaren Ausnehmung.

Montageseitig wird nach der Fertigstellung der Anordnung und dem Drehen des Vierkantzapfens 8 zum Aufziehen der Schraubenfeder 13 nach Erreichen der gewünschten Aufzugsstellung die Blattfeder 36 radial nach innen gedrückt bis sie auf den Grund der Ausnehmung 38 aufliegt. Nach Loslassen des Vierkantzapfens 8 dreht sich dieser entsprechend dem Aufwickelsinn der Wickelwelle 4 und das freie Ende der Blattfeder 36 wird in den von der konkaven Wand 38 gebildeten Raum gedrückt und dort durch die konkave Gestalt gefangen gehalten. Die Blattfeder 36 kann nicht nach außen schnappen. Hierzu muss zunächst die Wickelwelle, wie zuvor erwähnt, im Abwickelsinne ein kurzes Stück gedreht werden.

Dadurch kommt das freie Ende der Blattfeder 36 aus dem von der Wand 38 gebildeten halbzylindrischen Hohlraum frei und kann radial nach außen schnappen. In der entspannten Stellung hat ihr freies Ende von der Rotationsachse der Lagerbüchse 24 einen Abstand, der eine Kollision der Blattfeder 36 mit Teilen des Bunds verhindert.

Eine Rollobaueinheit, bestehend aus einer Wickelwelle und wenigstens einer Lagereinrichtung ist mit einer Sperreinrichtung versehen, die dazu dient, nach der Montage den Federmotor in der aufgezogenen Stellung festzuhalten. Nach dem Einbau der Rollobauneinheit im Fahrzeug oder dem betreffenden Gehäuse wird die Sperreinrichtung durch Betätigen der Rollowelle gelöst.

## Patentansprüche

1. Vormontierte Rollobaugruppe (1)
mit einer zwei Enden aufweisenden Wickelwelle (4),
mit einer Rollobahn (2), die an der Wickelwelle (4) mit einer Kante befestigt ist,
mit einem Federmotor (12), der dazu eingerichtet ist, die Wickelwelle (4) im Sinne des Aufwickelns der Rollobahn (2) auf die Wickelwelle (4) vorzuspannen, und der zwei Betätigungsenden (14) aufweist, von denen eines an der Wickelwelle (4) verankert ist,
mit wenigstens einer Lagereinrichtung (6,24), die an einem Ende der Wickelwelle (4) vorgesehen ist, an der das andere Betätigungsende (14) des Federmotors (12) festgelegt ist und die Verbindungsmittel (8) zur Anbringung in einem Fahrzeug oder einem Gehäuse aufweist, und
mit einer willkürlich und ohne Werkzeug lösbaren Drehsperreinrichtung (17, 18, 29, 36, 38, 39), die dazu eingerichtet ist, bei der Montage der Rolloeinrichtung (1) in den Sperrzustand gebracht zu werden, in der sie den zwischen der Wickelwelle (4) und der Lagereinrichtung (6,24) wirksamen Federmotor (12) in einer der aufgewickelten Rollobahn (2) entsprechenden vorgespannten Stellung blockiert, und bei oder nach dem Einbau der Rolloeinrichtung (1) in das Fahrzeug oder das Gehäuse in ihre Entsperrstellung überführt zu werden, um nach dem Entsperren auf Dauer in der Entsperrstellung zu bleiben,
wobei die Drehsperreinrichtung (17,18,29,36,38,39) derart gestaltet ist, dass sie durch ein Betätigen der Wickelwelle (4) im Sinne des Abwickelns der Rollobahn (2) von der Wickelwelle in die Entsperrstellung überführt wird,
wobei die Drehsperreinrichtung (17, 18, 29, 36, 38, 39) ein unverlierbar gehaltertes erstes Sperrmittel (17, 18, 29, 36, 38, 39) sowie ein unverlierbar gehaltertes zweites Sperrmittel (17,18,29,36,38,39) aufweist, die dazu eingerichtet sind miteinander zusammen zu wirken, wobei eines der Sperrmittel (17, 18, 29, 36, 38, 39) drehfest mit der Wickelwelle (4) und das andere drehfest mit der Lageeinrichtung (6,24) verbunden ist, und
wobei eines der Sperrmittel (17, 18, 36) federelastisch beweglich und das andere Sperrmittel (29, 38, 39) starr ist.

2. Rollobaugruppe nach Anspruch 1, **dadurch gekennzeichnet, dass** die Drehsperreinrichtung (17, 18, 29, 36, 38, 39) frei von Teilen ist, die nach dem Überführen der Drehsperreinrichtung (17, 18, 29, 36, 38, 39) in die Entsperrstellung lose sind.

3. Rollobaugruppe nach Anspruch 1, **dadurch gekennzeichnet, dass** das bewegliche Sperrmittel (17,18,36) in die Entsperrstellung vorgespannt ist.

4. Rollobaugruppe nach Anspruch 1, **dadurch gekennzeichnet, dass** die beiden Sperrmittel (17, 18, 29, 36, 38, 39) auf Grund ihrer Gestalt derart miteinander zusammenwirken, dass die beiden Sperrmittel (17, 18, 29, 36, 38, 39) lediglich zufolge der Vorspannung, die zwischen der Wickelwelle (4) und der Lagereinrichtung (6,24) wirksam ist, miteinander im Eingriffszustand gehalten sind.

5. Rollobaugruppe nach Anspruch 1, **dadurch gekennzeichnet, dass** das bewegliche Sperrmittel (17,18,36) bezüglich einer Achse parallel zu der Längsachse der Wickelwelle (4) beweglich ist.

6. Rollobaugruppe nach Anspruch 1, **dadurch gekennzeichnet, dass** das bewegliche Sperrmittel (17,18,36) um eine Achse beweglich ist, die rechtwinklig zu der Achse der Wickelwelle (4) verläuft.

7. Rollobaugruppe nach Anspruch 1, **dadurch gekennzeichnet, dass** die Drehsperreinrichtung (17, 18, 29, 36, 38, 39) zwei bewegliche Sperrmittel (17, 18, 36) aufweist, die in entgegengesetzte Drehrichtung wirksam sind, derart, dass die Drehsperreinrichtung (17,18,29,36,38,39) unabhängig von dem Wickelsinn der Wickelwelle (4) beim Aufwickeln der Rollobahn (2) verwendbar ist.

8. Rollobaugruppe nach Anspruch 7, **dadurch gekennzeichnet, dass** die Drehsperreinrichtung (17, 18, 29, 36, 38, 39) zwei starre Sperrmittelausnehmungen (29,37) aufweist, von denen jede mit einem beweglichen Sperrmittel (17,18,36) zusammenwirkt.

9. Rollobaugruppe nach Anspruch 7, **dadurch gekennzeichnet, dass** die Drehsperreinrichtung (17, 18, 29, 36, 38, 39) mehrere starre Sperrmittel (17,18,29,36,38,39) aufweist, von denen jedes zum Zusammenwirken mit einem der beweglichen Sperrmittel (17, 18, 36) eingerichtet ist.

10. Rollobaugruppe nach Anspruch 1, **dadurch gekennzeichnet, dass** das bewegliche Sperrmittel (17,18,36) von einer Klinke gebildet ist.

11. Rollobaugruppe nach Anspruch 11, **dadurch gekennzeichnet, dass** das starre Sperrmittel von einer Ausnehmung (29,37) gebildet ist.

12. Rollobaugruppe nach Anspruch 1, **dadurch gekennzeichnet, dass** die Drehsperreinrichtung (17,18,29,36,38, 39,43) derart gestaltet ist, dass durch eine axiale Verschiebung der Lageeinrichtung (6,24) bezüglich der Wickelwelle (4) die Drehsperreinrichtung (17,18,29,36,38,39,43) in die Entsperrstellung zu überführen ist.

13. Rollobaugruppe nach Anspruch 1, **dadurch gekennzeichnet, dass** die Rollobaugruppe (1) im eingebauten Zustand ein Fensterrollo eines Kraftfahrzeugs bildet.

14. Rollobaugruppe nach Anspruch 1, **dadurch gekennzeichnet, dass** die Rollobaugruppe (1) im eingebauten Zustand eine Laderaumabdeckung für ein Kraftfahrzeug bildet.

15. Rollobaugruppe nach Anspruch 1, **dadurch gekennzeichnet, dass** die Wickelwelle (4) rohrförmig ist und dass der Federmotor in der Wickelwelle untergebracht ist.

16. Rollobaugruppe nach Anspruch 1, **dadurch gekennzeichnet, dass** der Federmotor eine Schraubenfeder (12) umfasst.

17. Rollobaugruppe nach Anspruch 1, **dadurch gekennzeichnet, dass** die Wickelwelle (4) an ihrem anderen Ende mit einer zweiten Lagereinrichtung (5) versehen ist.

18. Rollobaugruppe nach Anspruch 17, **dadurch gekennzeichnet, dass** die Wickelwelle (4) auf der zweiten Lagereinrichtung (5) frei drehbar ist.

19. Rollobaugruppe nach Anspruch 17, **dadurch gekennzeichnet, dass** die zweite Lagereinrichtung (5) unverlierbar mit der Wickelwelle (4) verbunden ist.

20. Rollobaugruppe nach Anspruch 17, **dadurch gekennzeichnet, dass** die zweite Lagereinrichtung (5) von einem einfachen mit der Wickelwelle (4) verbundenen Lagerzapfen gebildet ist.

## Claims

1. Preassembled roller blind assembly (1)
with a winding shaft (4) having two ends,
with a blind (2), which is fastened at one edge to the winding shaft (4),
with a spring motor (12), which is fitted to bias the winding shaft (4) in the direction of winding the blind (2) up onto the winding shaft (4), and which has two operating ends (14), of which one is anchored on the winding shaft (4),
with at least one bearing means (6, 24), which is provided on one end of the winding shaft (4), on which the other operating end (14) of the spring motor (12) is fixed and has the connecting means (8) for attachment in a vehicle or a housing, and
with a rotary locking means (17, 18, 29, 36, 38, 39,), which may be released voluntarily and without a tool, and when the roller blind assembly (1) is mounted said rotary locking means is fitted to be brought into the locked state, in which it blocks the spring motor (12) active between the winding shaft (4) and the bearing means (6, 24) in a biased position corresponding to the wound-up blind (2), and during or after installation of the roller blind assembly (1) into the vehicle or housing it is fitted to be transferred into its unlocked position in order to remain permanently in the unlocked position after unlocking,
wherein the rotary locking means (17, 18, 29, 36, 38, 39) is configured so that it is transferred into the unlocked position by the winding shaft by operating the winding shaft (4) in the direction of unwinding the blind (2),
wherein the rotary locking means (17, 18, 29, 36, 38, 39) has an undetachably held first locking element (17, 18, 29, 36, 38, 39) as well as an undetachably held second locking element (17, 18, 29, 36, 38, 39), which are fitted to cooperate with one another, one of the locking elements (17, 18, 29, 36, 38, 39) being connected against rotation to the winding shaft (4) and the other being connected against rotation to the bearing means (6, 24), and
wherein one of the locking elements (17, 18, 36) is movable and the other locking element (29, 38, 39) is rigid.

2. Roller blind assembly according to claim 1, **characterised in that** the rotary locking means (17, 18, 29, 36, 38, 39) has no parts, which are loose after the rotary locking means (17, 18, 29, 36, 38, 39) has been transferred into the unlocked position.

3. Roller blind assembly according to claim 1, **characterised in that** the movable locking element (17, 18, 36) is biased into the unlocked position.

4. Roller blind assembly according to claim 1, **characterised in that** because of their structure, the two locking elements (17, 18, 29, 36, 38, 39) cooperate with one another in such a way that the two locking elements (17, 18, 29, 36, 38, 39) are held together in engaged state only as a result of the bias, which is active between the winding shaft (4) and the bearing means (6, 24).

5. Roller blind assembly according to claim 1, **characterised in that** the movable locking element (17, 18, 36) is movable with respect to an axis parallel to the longitudinal axis of the winding shaft (4).

6. Roller blind assembly according to claim 1, **characterised in that** the movable locking element (17, 18, 36) is movable around an axis, which runs at right angles to the axis of the winding shaft (4).

7. Roller blind assembly according to claim 1, **characterised in that** the rotary locking means (17, 18, 29, 36, 38, 39) has two movable locking elements (17, 18, 36), which are active in opposed direction of rotation such that the rotary locking means (17, 18, 29, 36, 38, 39) may be used independently of the winding direction of the winding shaft (4) when winding up the blind (2).

8. Roller blind assembly according to claim 7, **characterised in that** the rotary locking means (17, 18, 29, 36, 38, 39) has two rigid locking element recesses (29, 37), each of which cooperates with one of the movable locking elements (17, 18, 36).

9. Roller blind assembly according to claim 7, **characterised in that** the rotary locking means (17, 18, 29, 36, 38, 39) has several rigid locking elements (17, 18, 29, 36, 38, 39), each of which is fitted to cooperate with one of the movable locking elements (17, 18, 36).

10. Roller blind assembly according to claim 1, **characterised in that** the movable locking element (17, 18, 36) is formed by a latch.

11. Roller blind assembly according to claim 11, **characterised in that** the rigid locking element is formed by a recess (29, 37).

12. Roller blind assembly according to Claim 1, **characterised in that** the rotary locking means (17, 18, 29, 36, 38, 39, 43) is configured so that the rotary locking means (17, 18, 29, 36, 38, 39, 43) is to be transferred into the unlocked position by an axial displacement of the bearing means (6, 24) with respect to the winding shaft (4).

13. Roller blind assembly according to claim 1, **characterised in that** when installed, the roller blind assembly (1) forms a window blind for a motor vehicle.

14. Roller blind assembly according to claim 1, **characterised in that** when installed, the roller blind assembly (1) forms a luggage compartment cover for a motor vehicle.

15. Roller blind assembly according to claim 1, **characterised in that** the winding shaft (4) is tubular, and that the spring motor is housed in the winding shaft.

16. Roller blind assembly according to claim 1, **characterised in that** the spring motor comprises a coil spring (12).

17. Roller blind assembly according to claim 1, **characterised in that** the winding shaft (4) is provided with a second bearing means (5) on its other end.

18. Roller blind assembly according to claim 17, **characterised in that** the winding shaft (4) is freely rotatable on the second bearing means (5).

19. Roller blind assembly according to claim 17, **characterised in that** the second bearing means (5) is undetachably connected to the winding shaft (4).

20. Roller blind assembly according to claim 17, **characterised in that** the second bearing means (5) is formed by a simple bearing journal connected to the winding shaft (4).

## Revendications

1. Ensemble de store à enrouleur (1) préassemblé, comportant
• une barre d'enroulement (4), qui présente deux extrémités,
• une bande de store (2), qui est fixée par un bord à la barre d'enroulement (4),
• un moteur à ressort (12), qui est agencé de manière à précontraindre la barre d'enroulement (4) dans le sens de l'enroulement de la bande de store (2) sur ladite barre d'enroulement (4) et présente deux extrémités actives (14), dont l'une est liée à la barre d'enroulement (4),
• au moins un système de palier (6, 24) prévu à une extrémité de la barre d'enroulement (4), auquel l'autre extrémité active (14) du moteur à ressort (12) est fixée et qui présente des moyens de fixation pour le montage dans un véhicule automobile ou dans un carter, et
• un dispositif de verrouillage en rotation (17, 18, 29, 36, 38, 39), libérable de manière arbitraire et sans outil, qui est conçu pour être placé, au moment de l'assemblage du système de store (1), dans la position de verrouillage dans laquelle il bloque le moteur à ressort (12) agissant entre la barre d'enroulement (4) et le système de palier (6, 24) dans un état de précontrainte associé enroulé de la bande de store (2), et pour être amené, au moment du montage ou après le montage du store à enrouleur (1) dans le véhicule ou dans le carter, dans sa position déverrouillée et rester durablement dans la position déverrouillée obtenue après déverrouillage,
le dispositif de verrouillage en rotation (17, 18, 29, 36, 38, 39) étant agencé de telle sorte qu'il est amené dans la position déverrouillée par un actionnement de la barre d'enroulement (4) dans le sens du déroulement de la bande de store (2) de la barre d'enroulement,
le dispositif de verrouillage en rotation (17, 18, 29, 36, 38, 39) comportant un premier moyen de verrouillage (17, 18, 29, 36, 38, 39) imperdable et un second moyen de verrouillage (17, 18, 29, 36, 38, 39) imperdable, qui coopèrent l'un avec l'autre, l'un des moyens de verrouillage (17, 18, 29, 36, 38, 39) étant solidaire en rotation de la barre d'enroulement (4) et l'autre moyen de verrouillage (17, 18, 29, 36, 38, 39) étant solidaire en rotation du système de palier (6, 24) et
l'un des moyens de verrouillage (17, 18, 36) étant mobile élastiquement, et l'autre moyen de verrouillage (29, 38, 39) étant rigide.

2. Ensemble de store à enrouleur selon la revendication 1, **caractérisé par le fait que** le dispositif de verrouillage en rotation (17, 18, 29, 36, 38, 39) ne comporte pas de pièces qui sont libres dans la position déverrouillée, après déverrouillage du dispositif de verrouillage en rotation (17, 18, 29, 36, 38, 39, 43).

3. Ensemble de store à enrouleur selon la revendication 1, **caractérisé par le fait que** le moyen de verrouillage mobile (17, 18, 36) est précontraint dans la position déverrouillée.

4. Ensemble de store à enrouleur selon la revendication 1, **caractérisé par le fait que** les deux moyens de verrouillage (17, 18, 29, 36, 38, 39), de par leur agencement, coopèrent l'un avec l'autre de telle sorte que les deux moyens de verrouillage (17, 18, 29, 36, 38, 39) sont maintenus en prise mutuelle uniquement par la précontrainte qui agit entre la barre d'enroulement (4) et le système de palier (6, 24).

5. Ensemble de store à enrouleur selon la revendication 1, **caractérisé par le fait que** le moyen de verrouillage (17, 18, 36) mobile est mobile par rapport à un axe qui est parallèle à l'axe longitudinal de la barre d'enroulement (4).

6. Ensemble de store à enrouleur selon la revendication 1, **caractérisé par le fait que** le moyen de verrouillage (17, 18, 36) mobile est mobile par rapport à un axe qui est perpendiculaire à l'axe de la barre d'enroulement (4).

7. Ensemble de store à enrouleur selon la revendication 4, **caractérisé par le fait que** le dispositif de verrouillage en rotation (17, 18, 29, 36, 38, 39) comporte deux moyens de verrouillage (17, 18, 29, 36, 38, 39) mobiles, qui agissent dans des sens de rotation opposés, de sorte que le dispositif de verrouillage en rotation (17, 18, 29, 36, 38, 39, 43) est utilisable lors de l'enroulement de la bande store (2), indépendamment du sens d'enroulement de la barre d'enroulement (4).

8. Ensemble de store à enrouleur selon la revendication 7, **caractérisé par le fait que** le dispositif de verrouillage en rotation (17, 18, 29, 36, 38, 39) comporte plusieurs moyens de verrouillage (29, 37) rigides, qui coopèrent chacun avec un des moyens de verrouillage (17, 18, 36) mobiles.

9. Ensemble de store à enrouleur selon la revendication 7, **caractérisé par le fait que** le dispositif de verrouillage en rotation (17, 18, 29, 36, 38, 39) comporte plusieurs moyens de verrouillage (17, 18, 29, 36, 38, 39) rigides, qui sont agencés chacun pour coopérer avec un des moyens de verrouillage (17, 18, 36) mobiles.

10. Ensemble de store à enrouleur selon la revendication 1, **caractérisé par le fait que** le moyen de verrouillage (17, 18, 36) mobile est formé d'un cliquet.

11. Ensemble de store à enrouleur selon la revendication 10, **caractérisé par le fait que** le moyen de verrouillage (17, 18, 36) rigide est formé d'un évidement (29, 37).

12. Ensemble de store à enrouleur selon la revendication 1, **caractérisé par le fait que** le dispositif de verrouillage en rotation (17, 18, 29, 36, 38, 39, 43) est agencé de telle sorte que le dispositif de verrouillage en rotation (17, 18, 29, 36, 38, 39, 43) est amené en position déverrouillée par un déplacement axial du système de palier (6, 24) par rapport à la barre d'enroulement (4).

13. Ensemble de store à enrouleur selon la revendication 1, **caractérisé par le fait que** l'ensemble de store à enrouleur (1) à l'état installé forme un store à enrouleur de fenêtre d'un véhicule automobile.

14. Ensemble de store à enrouleur selon la revendication 1, **caractérisé par le fait que** l'ensemble de store à enrouleur (1) à l'état installé forme un rideau de coffre à bagages d'un véhicule automobile.

15. Ensemble de store à enrouleur selon la revendication 1, **caractérisé par le fait que** la barre d'enroulement (4) est tubulaire et que le moteur à ressort est logé dans la barre d'enroulement.

16. Ensemble de store à enrouleur selon la revendication 1, **caractérisé par le fait que** le moteur à ressort est un ressort hélicoïdal (12).

17. Ensemble de store à enrouleur selon la revendication 1, **caractérisé par le fait que** la barre d'enroulement (4), à son autre extrémité, est équipée d'un second système de palier (5).

18. Ensemble de store à enrouleur selon la revendication 17, **caractérisé par le fait que** la barre d'enroulement (4) est libre en rotation dans le second système de palier (5).

19. Ensemble de store à enrouleur selon la revendication 17, **caractérisé par le fait que** le second système de palier (5) est lié de manière imperdable à la barre d'enroulement (4).

20. Ensemble de store à enrouleur selon la revendication 17, **caractérisé par le fait que** le second système de palier (5) est formé d'un simple tourillon lié à la barre d'enroulement (4).
